# EUROPEAN PATENT SPECIFICATION

(11) **EP 3 725 682 B1**
(45) Date of publication and mention of the grant of the patent: **15.02.2023**
(21) Application number: 19215142.1
(22) Date of filing: 11.12.2019
(51) Int. Cl.: B64D 9/00

(54) **WIRELESS MOBILE MAINTENANCE DISPLAY UNIT AND SYSTEM FOR CARGO HANDLING SYSTEM**
DRAHTLOSE MOBILE WARTUNGSANZEIGEEINHEIT UND SYSTEM FÜR EIN FRACHTHANDHABUNGSSYSTEM
UNITÉ ET SYSTÈME D'AFFICHAGE DE MAINTENANCE MOBILE SANS FIL POUR SYSTÈME DE MANIEMENT DE CHARGEMENT

(30) Priority: 17.04.2019 US 201916387285
(43) Date of publication of application: 21.10.2020
(60) Divisional application: 23150333.5
(73) Proprietor: Goodrich Corporation, Charlotte, NC 28217-4578 (US)
(72) Inventor: KISH, Shad, Jamestown, ND 58401 (US); ROBERTS, Aaron, Jamestown, ND 58401 (US)
(74) Representative: Dehns

(56) References cited:
- US-A1- 2007 112 488
- US-A1- 2010 100 225
- US-B2- 7 003 374
- US-B2- 7 198 227

## Description

### FIELD

The present disclosure relates generally to cargo handling systems and, more particularly, to systems used to monitor and maintain cargo handling systems.

### BACKGROUND

Cargo handling systems for aircraft typically include various tracks and rollers disposed on a cargo deck that spans the length of a cargo compartment. Cargo may be loaded from an entrance of the aircraft and transported by the cargo system to forward or aft locations, depending upon the configuration of the aircraft. Cargo handling systems, such as, for example, those used on aircraft for transport of heavy containerized cargo or pallets, also referred to herein as unit load devices (ULDs), typically include roller trays containing transport rollers that support and transport the containerized cargo or pallets. Motor driven rollers are typically employed in these systems. In certain aircraft, a plurality of motor driven power drive units (PDUs) is used to propel the containers or pallets within the cargo compartment. Once the containers or pallets reach a desired destination within a cargo compartment, restraint devices, such as, for example, latches may be deployed to restrain the containers or pallets from vertical or lateral movement during flight. This configuration facilitates transportation of the containers or pallets within the cargo compartment by one or more operators controlling operation of the PDUs. A wall-mounted cargo maintenance display unit (CMDU) may be configured to receive commands and display information relating to the operation or operational status of the various components comprising the cargo handling system, including, for example, the PDUs, a master control panel (MCP) and a plurality of local control panels (LCPs) distributed throughout the cargo handling system. US 7,003,374 B1 describes an aircraft cargo loading logistics system. US 2007/0112488 A1 describes the centralized management of maintenance and materials for commercial aircraft fleets. US 2010/100225 A1 describes an integrated aircraft cargo loading and monitoring system. US 7198227 B2 describes an aircraft cargo locating system.

### SUMMARY

According to a first aspect, a cargo handling system according to claim 1 is provided.

In various embodiments, the first data device comprises a first radio frequency identification tag. In various embodiments, the first radio frequency identification tag is configured to provide identification data of the first line replaceable unit and the first operational status data of the first line replaceable unit. In various embodiments, the first line replaceable unit comprises at least one of a power drive unit, a local control panel or a master control panel. In various embodiments, the wireless mobile maintenance display unit is configured to read identification data unique to an operator.

In various embodiments, the system includes a second line replaceable unit and a second data device is configured to provide a second operational status data concerning the second line replaceable unit to the wireless mobile maintenance display unit. In various embodiments, the first line replaceable unit is a power drive unit and the second line replaceable unit is a local control panel or a master control panel. In various embodiments, the wireless mobile maintenance display unit is configured for operable communication with a controller configured to provide access to a fault isolation manual or a troubleshooting manual.

In various embodiments, the wireless mobile maintenance display unit is configured for operable communication with at least one of a system controller or an auxiliary control system. In various embodiments, the at least one of the system controller or the auxiliary control system comprises a server or a storage location configured to provide access to at least one of a fault isolation manual, a cargo load plan, a parts catalog or a virtual training center.

The wireless mobile maintenance display unit may include for example a first reader configured to read an identification data unique to an operator; a second reader configured to read an operational status data of a line replaceable unit; a touch sensitive display screen; and an operator alert configured to alert the operator of an anomaly within or associated with the line replaceable unit.

The first reader may include for example at least one of a first radio frequency identification device or a near-field communication device configured to read the identification data unique to the operator. The second reader may include for example a second radio frequency identification device configured to read the operational status data of the line replaceable unit. The operator alert may include for example at least one of a rumble feedback mechanism, a visual indicator or a sound indicator. The touch sensitive display screen may be configured for example to operate or manipulate applications accessible by the wireless mobile maintenance display unit. A camera may be configured for example to capture a photograph of the line replaceable unit and the wireless mobile maintenance display unit may be configured to forward the photograph to a vendor or support provider.

According to a second aspect, a method of monitoring an operational status of a line replaceable unit within a cargo handling system according to claim 11 is provided.

In various embodiments, the method includes reading an identification data unique to the operator. In various embodiments, the method includes accessing a server or a storage location configured to provide at least one of a fault isolation manual, a cargo load plan, a parts catalog or a virtual training center. In various embodiments, the line replaceable unit comprises at least one of a power drive unit, a local control panel or a master control panel.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a schematic view of an aircraft being loaded with cargo, in accordance with various embodiments;
FIG. 1B illustrates a portion of a cargo handling system, in accordance with various embodiments;
FIG. 2 illustrates a portion of a cargo handling system, in accordance with various embodiments;
FIGS. 3A and 3B illustrate a schematic view of a cargo deck having a cargo handling system with a plurality of PDUs, in accordance with various embodiments;
FIGS. 4A, 4B and 4C illustrate a wireless mobile maintenance display unit (WMMDU) in operable communication with an operator identification device and an associated with a particular operator and an operational status data device associated with a particular LRU, in accordance with various embodiments;
FIG. 5 illustrates a cargo maintenance system, in accordance with various embodiments; and
FIG. 6 describes a method of monitoring an operational status of a line replaceable unit within a cargo handling system

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

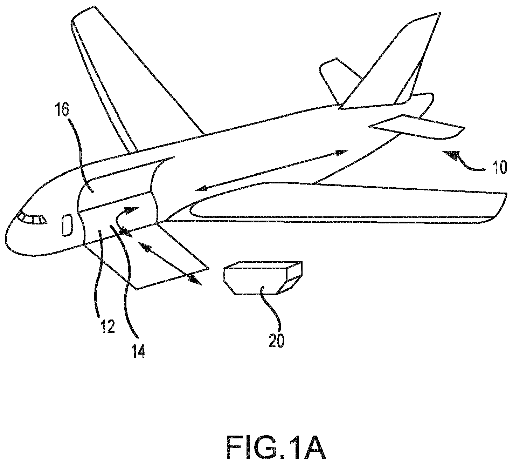

With reference to FIG. 1A, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, the ULDs are available in various sizes and capacities and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought onboard the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

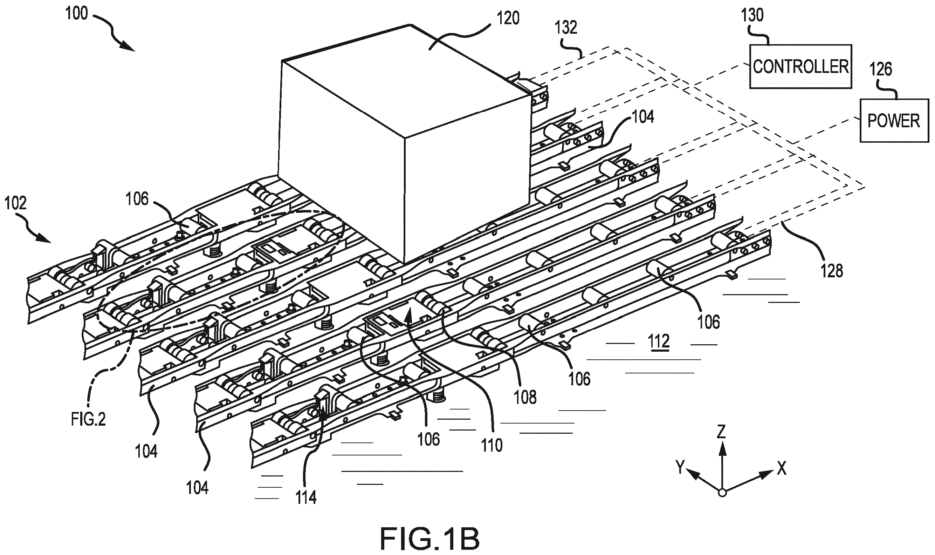

Referring now to FIG. 1B, a portion of a cargo handling system 100 is illustrated, in accordance with various embodiments. The cargo handling system 100 is illustrated with reference to an XYZ coordinate system, with the X-direction extending longitudinally and the Z-direction extending vertically with respect to an aircraft in which the cargo handling system 100 is positioned, such as, for example, the aircraft 10 described above with reference to FIG. 1A. In various embodiments, the cargo handling system 100 may define a conveyance surface 102 having a plurality of trays 104 supported by a cargo deck 112, such as, for example, the cargo deck 12 described above with reference to FIG. 1A. The plurality of trays 104 may be configured to support a unit load device (ULD) 120 (or a plurality of ULDs), such as, for example, the unit load device (ULD) 20 described above with reference to FIG. 1A. The ULD 120 may comprise a container or a pallet configured to hold cargo as described above. In various embodiments, the plurality of trays 104 is disposed throughout the cargo deck 112 and may support a plurality of conveyance rollers 106, where one or more or all of the plurality of conveyance rollers 106 is a passive roller.

In various embodiments, the plurality of trays 104 may further support a plurality of power drive units (PDUs) 110 (or a power drive unit), each of which may include one or more drive rollers 108 (or a drive roller) that may be actively powered by a motor. In various embodiments, one or more of the plurality of trays 104 is positioned longitudinally along the cargo deck 112 - *e.g.,* along the X-direction extending from a forward end to an aft end of the aircraft. In various embodiments, the plurality of conveyance rollers 106 and the one or more drive rollers 108 may be configured to facilitate transport of the ULD 120 in the forward and the aft directions along the conveyance surface 102. During loading and unloading, the ULD 120 may variously contact the one or more drive rollers 108 to provide a motive force for transporting the ULD 120 along the conveyance surface 102. Each of the plurality of PDUs 110 may include an actuator, such as, for example, an electrically operated motor, configured to drive the one or more drive rollers 108 corresponding with each of the plurality of PDUs 110. In various embodiments, the one or more drive rollers 108 may be raised from a lowered position beneath the conveyance surface 102 to an elevated position above the conveyance surface 102 by the corresponding PDU.

As used with respect to the cargo handling system 100, the term "beneath" may refer to the negative Z-direction, and the term "above" may refer to the positive Z-direction with respect to the conveyance surface 102. In the elevated position, the one or more drive rollers 108 variously contact and drive the ULD 120 that otherwise rides on the plurality of conveyance rollers 106. Other types of PDUs, which can also be used in various embodiments of the present disclosure, may include a drive roller that is held or biased in a position above the conveyance surface by a spring. PDUs as disclosed herein may be any type of powered rollers that may be selectively energized to propel or drive the ULD 120 in a desired direction over the cargo deck 112 of the aircraft. In addition, in various embodiments, the disclosure contemplates the use of steerable PDUs, such as, for example, freighter common turntables (FCTs), which enable translation of the ULD 120 in directions other than fore and aft. The plurality of trays 104 may further support a plurality of restraint devices 114. In various embodiments, each of the plurality of restraint devices 114 may be configured to rotate downward as the ULD 120 passes over and along the conveyance surface 102. Once the ULD 120 arrives at a final or intended destination on the conveyance surface 102 for flight, corresponding ones of the plurality of restraint devices 114 are returned to upright positions, either by a motor driven actuator or a bias member, and locked against the ULD 120, thereby restraining or preventing the ULD 120 from translating in vertical or lateral directions.

In various embodiments, the cargo handling system 100 may include a system controller 130 in communication with each of the plurality of PDUs 110 via a plurality of channels 132. Each of the plurality of channels 132 may be a data bus, such as, for example, a controller area network (CAN) bus. An operator may selectively control operation of the plurality of PDUs 110 using the system controller 130. In various embodiments, the system controller 130 may be configured to selectively activate or deactivate the plurality of PDUs 110. Thus, the cargo handling system 100 may receive operator input through the system controller 130 to control the plurality of PDUs 110 in order to manipulate movement of the ULD 120 over the conveyance surface 102 and into a desired position on the cargo deck 112 or the conveyance surface 102. In various embodiments, the system controller 130 may include a general purpose processor, a digital signal processor (DSP), an application specific integrated circuit (ASIC), a field programmable gate array (FPGA) or some other programmable logic device, discrete gate or transistor logic, discrete hardware components, or any combination thereof. The cargo handling system 100 may also include a power source 126 configured to supply power to the plurality of PDUs 110 or to the plurality of restraint devices 114 via one or more power busses 128.

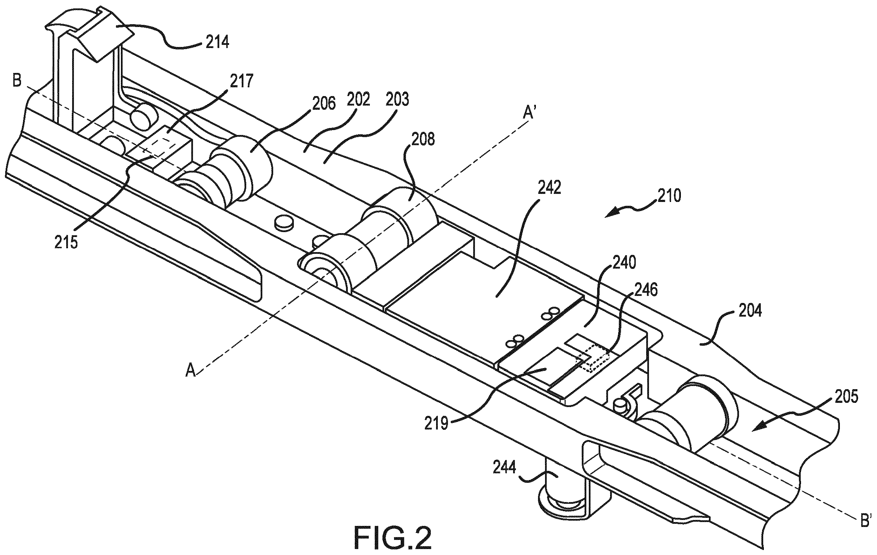

Referring now to FIG. 2, a PDU 210, such as for example, one of the plurality of PDUs 110 described above with reference to FIG. 1B, is illustrated disposed in a tray 204, in accordance with various embodiments. The PDU 210 may comprise a unit controller 240, a unit motor 242 and a drive roller 208 mounted within an interior section 205 of the tray 204. The drive roller 208 may comprise a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 of the tray 204. At least partial extension of the drive roller 208 above the conveyance surface 202 facilitates contact between the drive roller 208 and a lower surface of a ULD, such as, for example, the ULD 120 described above with reference to FIG. 1B. In various embodiments, the unit controller 240 is configured to control operation of the drive roller 208. The unit controller 240 may include a processor and a tangible, non-transitory memory. The processor may comprise one or more logic modules that implement logic to control rotation and elevation of the drive roller 208. In various embodiments, the PDU 210 may comprise other electrical devices to implement drive logic. In various embodiments, a connector 244 is used to couple the electronics of the PDU 210 to a power source and a system controller, such as, for example, the system controller 130 described above with reference to FIG. 1B. The connector 244 may have pins or slots and may be configured to couple to a wiring harness having pin programing. The unit controller 240 may be configured to receive commands from the system controller through the connector 244 in order to control operation of the unit motor 242.

In addition, a restraint device 214, such as, for example, one of the plurality of restraint devices 114 described above with reference to FIG. 1B, is illustrated as disposed within the tray 204 and configured to operate between a stowed position, whereby the ULD may pass over the restraint device, and a deployed position (as illustrated), whereby the ULD is restrained or prevented from translation in a longitudinal direction (*e.g.,* along a longitudinal axis B-B') without the restraint device 214 first being returned to the stowed position. The restraint device 214 includes a restraint controller 215 and a restraint motor 217. In various embodiments, the restraint device 214 may be in mechanical communication with the restraint motor 217, which may be, for example, an electromagnetic, electromechanical or electrohydraulic actuator or other servomechanism. In various embodiments, the restraint controller 215 is configured to control operation of the restraint device 214. The restraint controller 215 may include a processor and a tangible, non-transitory memory. The processor may comprise one or more logic modules that implement logic to control operation of the restraint device 214 between the stowed and the deployed positions.

In various embodiments, the PDU 210 may also include a radio frequency identification device (RFID) tag or RFID tag 246, or similar device, configured to store, transmit or receive information or data - *e.g.,* data related to an operational status of the PDU 210 or data identifying the unit and the location of the unit within a cargo handling system. Additionally, a ULD sensor 219 may be disposed within the tray 204 and configured to detect the presence of a ULD as the ULD is positioned over or proximate to the PDU 210 or the restraint device 214. In various embodiments, the ULD sensor 219 may include any type of sensor capable of detecting the presence of a ULD. For example, in various embodiments, the ULD sensor 219 may comprise a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like.

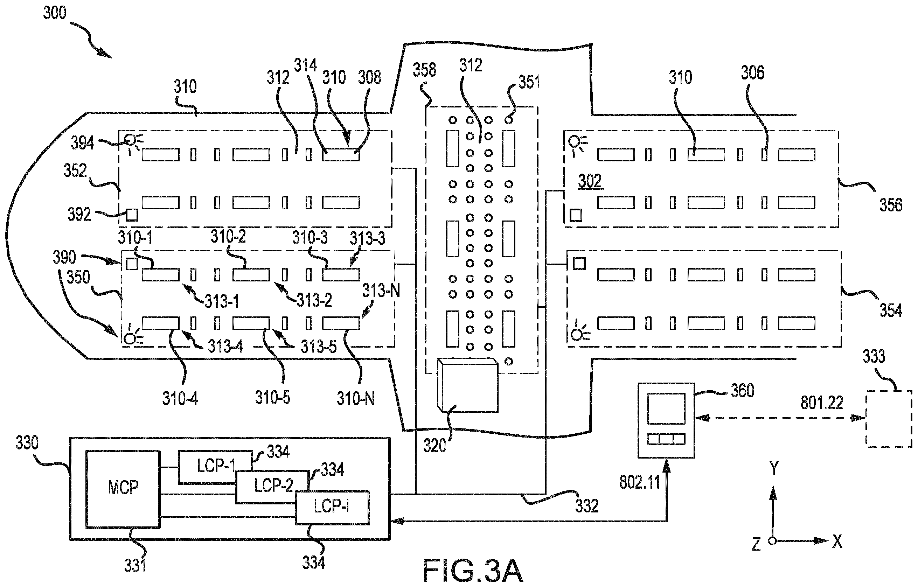

Referring now to FIG. 3A, a schematic view of a cargo handling system 300 positioned on a cargo deck 312 of an aircraft is illustrated, in accordance with various embodiments. The cargo deck 312 may comprise a plurality of PDUs 310, generally arranged in a matrix configuration about the cargo deck 312. Associated with each of the plurality of PDUs 310 may be one or more drive rollers 308 and a restraint device 314. In various embodiments, the plurality of PDUs 310, and the one or more drive rollers 308 and the restraint device 314 associated with each PDU 310, share similar characteristics and modes of operation as the PDU 210, drive roller 208 and restraint device 214 described above with reference to FIG. 2. Each of the one or more drive rollers 308 is generally configured to selectively protrude from a conveyance surface 302 of the cargo deck 312 in order to engage with a surface of a ULD 320 while being guided onto and over the conveyance surface 302 during loading and unloading operations. A plurality of conveyance rollers 306 may be arranged among the plurality of PDUs 310 in a matrix configuration as well. The plurality of conveyance rollers 306 may comprise passive elements, and may include roller ball units 351 that serve as stabilizing and guiding apparatus for the ULD 320 while being conveyed over the conveyance surface 302 by the plurality of PDUs 310.

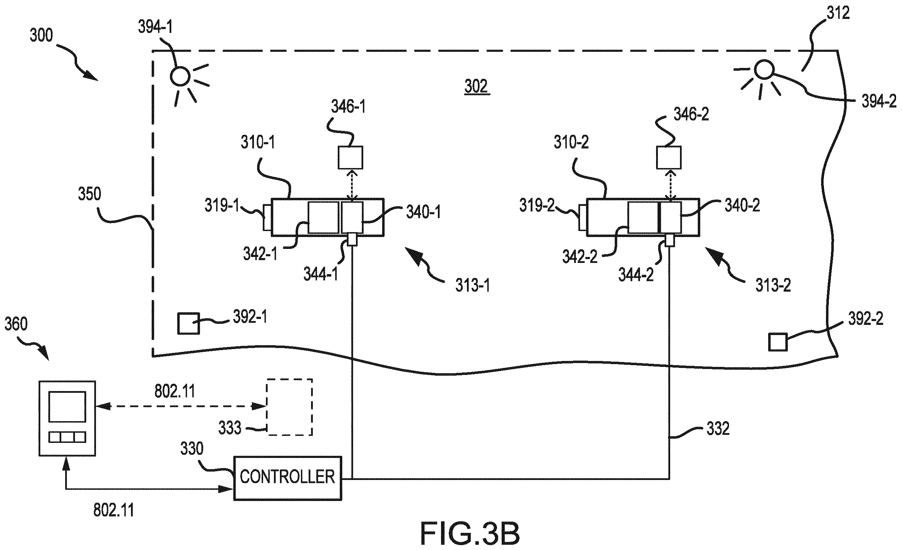

In various embodiments, the cargo handling system 300 or, more particularly, the conveyance surface 302, is divided into a plurality of sections. As illustrated, for example, the conveyance surface 302 may include a port-side track and a starboard-side track along which a plurality of ULDs may be stowed in parallel columns during flight. Further, the conveyance surface 302 may be divided into an aft section and a forward section. Thus, the port-side and starboard-side tracks, in various embodiments and as illustrated, may be divided into four or more sections - *e.g.,* a forward port-side section 350, a forward starboard-side section 352, an aft port-side section 354 and an aft starboard-side section 356. The conveyance surface 302 may also have a lateral section 358, which may be used to transport the ULD 320 onto and off of the conveyance surface 302 as well as transfer the ULD 320 between the port-side and starboard-side tracks and between the aft section and the forward section. The configurations described above and illustrated in FIG. 3 are exemplary only and may be varied depending on the context, including the numbers of the various components used to convey the ULD 320 over the conveyance surface 302. In various embodiments, for example, configurations having three or more track configurations, rather than the two-track configuration illustrated in FIG. 3, may be employed.

Each of the aforementioned sections - *i.e.,* the forward port-side section 350, the forward starboard-side section 352, the aft port-side section 354 and the aft starboard-side section 356 - may include one or more of the plurality of PDUs 310. Each one of the plurality of PDUs 310 has a physical location on the conveyance surface 302 that corresponds to a logical address within the cargo handling system 300. For purposes of illustration, the forward port-side section 350 is shown having a first PDU 310-1, a second PDU 310-2, a third PDU 310-3, a fourth PDU 310-4, a fifth PDU 310-5 and an N-th PDU 310-N. The aforementioned individual PDUs are located, respectively, at a first location 313-1, a second location 313-2, a third location 313-3, a fourth location 313-4, a fifth location 313-5 and an N-th location 313-N. In various embodiments, the location of each of the aforementioned individual PDUs on the conveyance surface 302 may have a unique location (or address) identifier, which, in various embodiments, may be stored in an RFID tag, such as, for example, the RFID tag 246 described above with reference to FIG. 2.

In various embodiments, an operator may control operation of the plurality of PDUs 310 using one or more control interfaces of a system controller 330, such as, for example, the system controller 130 described above with reference to FIG. 1B. For example, an operator may selectively control the operation of the plurality of PDUs 310 through an interface, such as, for example, a master control panel (MCP) 331. In various embodiments, the cargo handling system 300 may also include one or more local control panels (LCP) 334. In various embodiments, the master control panel 331 may communicate with the local control panels 334. The master control panel 331 or the local control panels 334 may also be configured to communicate with or send or receive control signals or command signals to or from each of the plurality of PDUs 310 or to a subset of the plurality of PDUs 310, such as, for example, the aforementioned individual PDUs described above with reference to the forward port-side section 350. For example, a first local control panel LCP-1 may be located in and configured to communicate with the PDUs residing in the forward port-side section 350, a second local control panel LCP-2 may be located in and configured to communicate with the PDUs residing in the forward starboard-side section 352, and one or more additional local control panels LCP-i may be located in and configured to communicate with the PDUs residing in one or more of the aft port-side section 354, the aft starboard-side section 356 and the lateral section 358. Thus, the master control panel 331 and the local control panels 334 may be configured to allow an operator to selectively engage or activate one or more of the plurality of PDUs 310 to propel the ULD 320 along the conveyance surface 302.

In various embodiments, each of the plurality of PDUs 310 may be configured to receive a command from the master control panel 331 or one or more of the local control panels 334. In various embodiments, the commands may be sent or information exchanged over a channel 332, which may provide a communication link between the system controller 330 and each of the plurality of PDUs 310. In various embodiments, a command signal sent from the system controller 330 may include one or more logical addresses, each of which may correspond to a physical address of one of the plurality of PDUs 310. Each of the plurality of PDUs 310 that receives the command signal may determine if the command signal is intended for that particular PDU by comparing its own address to the address included in the command signal. In various embodiments, the cargo handling system 300 may include a sensing system 390 that may comprise a plurality of sensors 392 and a plurality of cameras 394 configured to monitor activity, such as, for example, the presence of ULDs or operators within the various sections, throughout the cargo handling system 300.

With reference to FIG. 3B, a schematic view of a portion of the cargo handling system 300 and the cargo deck 312 is shown in accordance with various embodiments. By way of non-limiting example, the system controller 330 is configured to send a command signal through the channel 332 to at least the first PDU 310-1 and the second PDU 310-2 of the forward port-side section 350. The command signal may, for example, comprise an instruction to activate or deactivate a first motor 342-1 associated with the first PDU 310-1 or a second motor 342-2 associated with the second PDU 310-2. The command signal may also comprise a first address that corresponds to the first location 313-1 or a second address that corresponds to the second location 313-2. A first unit controller 340-1 of the first PDU 310-1 may receive the command signal through a first connector 344-1 and a second unit controller 340-2 of the second PDU 310-2 may receive the command signal through a second connector 344-2. Following receipt of the signal, the first unit controller 340-1 and the second unit controller 340-2 may determine whether the command is intended to affect operation of the first PDU 310-1 or the second PDU 310-2, respectively, by comparing a location address contained within the signal to a known address associated with the respective PDUs. In various embodiments, the first address associated with the first PDU 310-1 may be stored in a first RFID tag 346-1 and the second address associated with the second PDU 310-2 may be stored in a second RFID tag 346-2. Additionally, a ULD sensor, such as, for example, the ULD sensor 219 described above with reference to FIG. 2 may be disposed proximate each PDU and configured to detect the presence of a ULD as the ULD is positioned over or proximate to the PDU. Accordingly, a first ULD sensor 319-1 may be disposed proximate or within the first PDU 310-1 and a second ULD sensor 319-2 may be disposed proximate or within the second PDU 310-2. In various embodiments, a first sensor 392-1 and a first camera 394-1 may be disposed proximate or within the first PDU 310-1 and a second sensor 392-2 and a second camera 394-2 may be disposed proximate or within the second PDU 310-2 for monitoring activity within the forward port-side section 350.

Still referring to FIGS. 3A and 3B, the cargo handling system 300 may include a mobile maintenance functionality configured to selectively display information relating to the operation or operational status of a line replaceable unit (LRU) comprising the cargo handling system 300 - *e.g.,* a power drive unit, a local control panel or a master control panel. In various embodiments, for example, the cargo handling system 300 may include a wireless mobile maintenance display unit (WMMDU) 360 wirelessly connected to the system controller 330 or to an auxiliary control system 333 dedicated to the mobile maintenance functionality. In various embodiments, the WMMDU 360 may be configured to monitor the operation or operational status of one or more of the plurality of PDUs 310, which may, for example, include the fixed PDUs described above (*e.g.,* the PDU 210 described above with reference to FIG. 2) or the FCTs referred to above. In various embodiments, the WMMDU 360 may also be configured to control or to monitor the operation or operational status of the one or more local control panels 334 distributed throughout various sections of the cargo handling system 300, such as, for example, the forward port-side section 350, the forward starboard-side section 352, the aft port-side section 354 and the aft starboard-side section 356. In various embodiments, an aircraft having a cargo handling system, such as, for example, the cargo handling system 300 described above, may comprise hundreds of actuators used to actuate the various components associated with each of the plurality of PDUs 310 (*e.g.,* the drive roller 208 and the restraint device 214 described above with reference to FIG.2). Likewise, the cargo handling system 300 may comprise several LCPs distributed throughout each of the various sections (*e.g.,* the forward port-side section 350). As described below, the WMMDU 360 provides a tool for an operator or member of a maintenance crew, with the benefit of local access and direct visibility, to inspect the operability or operational status of each LRU comprising the cargo handling system 300, such as, for example, one or more of the plurality of PDUs 310, the one or more local control panels 334 or the master control panel 331. In various embodiments, the WMMDU 360 may comprise any device capable of providing a human-machine interface between the operator or maintenance crew member and the cargo handling system 300 or the various components of the cargo handling system 300. In various embodiments, for example, the WMMDU 360 may comprise a smart-phone or a tablet or a device having similar features of a smart-phone or a tablet.

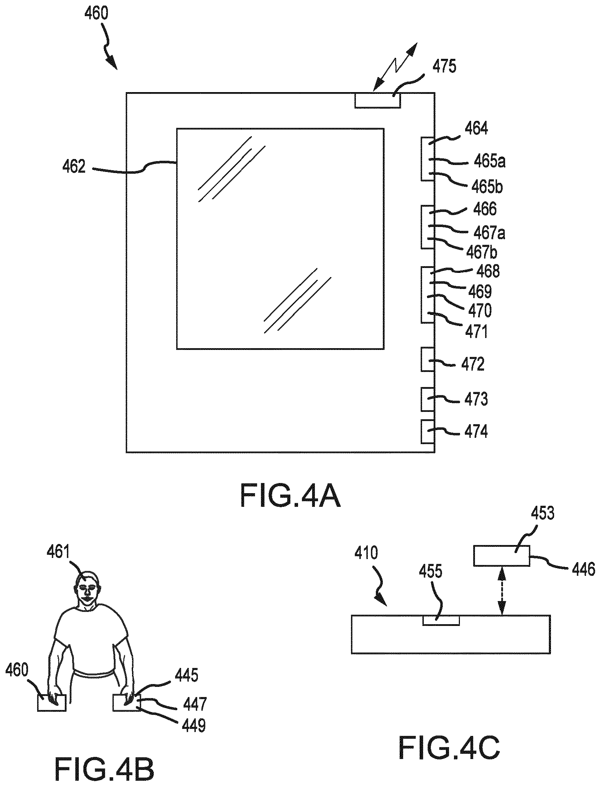

Referring now to FIG. 4A, a wireless mobile maintenance display unit (WMMDU) 460, similar to the wireless mobile maintenance display unit (WMMDU) 360 described above with reference to FIGS. 3A and 3B, is illustrated. In conjunction with FIG. 4A, an operator 461 manipulating the WMMDU 460 is illustrated in FIG. 4B, while an RFID tag 446, associated with a particular line replaceable unit (LRU), such as, for example, a PDU 410, is illustrated in FIG. 4C. As described elsewhere herein, the particular line replaceable unit may also include the master control panel 331 or one of the local control panels 334 described above with reference to FIG. 3A. The RFID tag 446 may be similar to one of the first RFID tag 346-1 associated with the first PDU 310-1 and the second RFID tag 346-2 associated with the second PDU 310-2 described above with reference to FIGS. 3A and 3B or the RFID tag 246 associated with the PDU 210 described above with reference to FIG. 2. An RFID tag, or similar information containing device, may also be associated with each local control panel configured to control operation of the PDU 410.

In various embodiments, the WMMDU 460 includes a touch sensitive display screen 462 (*e.g.,* a graphical user interface). The touch sensitive display screen 462 may, in various embodiments, be sensitive to a stylus pen, an operator's fingers or some other manner configured to operate or manipulate applications accessible by the WMMDU 460. The WMMDU 460 may further include a first reader 464 configured to read and recognize data identifying the operator 461 of the WMMDU 460 and a second reader 466 configured to read and recognize data associated with the particular LRU undergoing inspection. The WMMDU 460 is described as including the first reader 464 and the second reader 466 for convenience, though, in various embodiments, the first reader 464 and the second reader 466 may be combined into a single reader or input module.

In various embodiments, the first reader 464 may comprise a first RFID reader 465a (or a first radio frequency identification device) configured to read and recognize data contained within a first data device 445 (*see* FIG. 4B), such as, for example, a first RFID tag 447 attached to a badge 449 or, similarly, a card or some other device holding identification data unique to the operator 461 of the WMMDU 460. In various embodiments, the first reader 464 may comprise, or be supplemented with, a near-field communication device 465b configured to read and recognize the identification data unique to the operator 461. In operation, the operator 461 positions the WMMDU 460 within a required proximity of the first data device 445, such that the first reader 464 may read the identification data unique to the operator 461. In various embodiments, the operator 461 may then logon to the WMMDU 460 or to a system controller or an auxiliary control system, such as, for example, the system controller 330 or the auxiliary control system 333, described above with reference to FIGS. 3A and 3B. This enables the operator 461 to establish a human-machine interface, via the WMMDU 460, with the cargo handling system, including each of the LRUs that comprise the system.

The second reader 466 may, in various embodiments, comprise a second RFID reader 467a (or a second radio frequency identification device) configured to read and recognize data contained within a second data device 453 (*see* FIG. 4C), such as, for example, the RFID tag 446 (or first radio frequency identification tag), associated with the PDU 410 (or first line replaceable unit) or with a second line replaceable unit, such as, for example, one or more of the local control panels 334 or the master control panel 331 described above with reference to FIGS. 3A and 3B. The second reader 466 may also include, or be supplemented with, a quick response (QR) reader 467b configured to read information contained within, for example, a QR code 455 that is unique to either the first line replaceable unit or the second line replaceable unit. In various embodiments, a bar code reader (either linear or matrix, for example) may also be included and configured to read information contained within a bar code. In operation, the operator 461 positions the WMMDU 460 within a required proximity of the second data device 453, such that the second reader 466 may read data concerning the operation or operational status of the first line replaceable unit (*e.g.,* a first operational status data concerning the first line replaceable unit) or the second line replaceable unit (*e.g.,* a second operational status data concerning the second line replaceable unit).

The WMMDU 460 may also include an operator alert 468 configured to alert the operator of the WMMDU 460 of an anomaly or a failure within or associated with a particular LRU (*e.g.,* an anomalous unit or a failed unit), such as, for example, the PDU 410 or one or more of the local control panels 334 or the master control panel 331 described above with reference to FIGS. 3A and 3B. In various embodiments, for example, the operator alert 468 may comprise a rumble feedback mechanism 469, a visual indicator 470, such as a flashing light, or a sound indicator 471, such as an audible alarm. The operator alert 468 may be configured to respond to data or information received, for example, from the RFID tag 446 associated with the PDU 410 or from another LRU, such as, for example, one or more of the plurality of PDUs 310, one or more of the local control panels 334 or the master control panel 331 described above with reference to FIGS. 3A and 3B.

The WMMDU 460 may also include a camera 472. In various embodiments, the camera 472 may be used to photograph the LRU experiencing the anomaly, after which the WMMDU 460 may be used to forward the photograph to, for example, a vendor or support provider that provides customer support or product support. In various embodiments, the photograph may also be saved on a database, such as, for example, a file server in communication with an auxiliary control system, such as, for example, the auxiliary control system 333, described above with reference to FIGS. 3A and 3B. The WMMDU 460 may also include a storage module 473 configured to store content, such as, for example, notes taken during examination of the LRU experiencing the anomaly or otherwise being inspected. In various embodiments, the WMMDU may also include a recording module 474 for recording audio or video data, such as, for example, voice memos, videos or written memoranda prepared by an operator. The recording module 474 may be used, in addition, to integrate repair orders, customer support assistance memoranda or to prepare and store related paperwork concerning maintenance. In various embodiments, the WMMDU also comprises a communication module 475 configured to communicate with one or more of a system controller or an auxiliary control system, such as, for example, the system controller 330 or the auxiliary control system 333 described above with reference to FIGS. 3A and 3B.

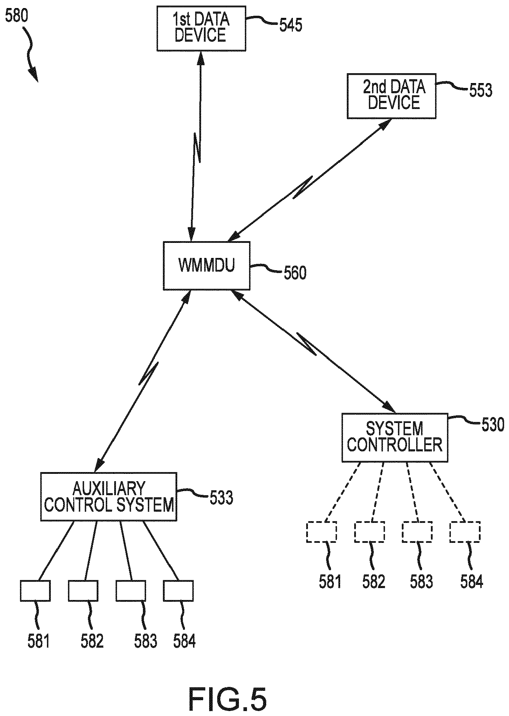

Referring now to FIG. 5, a cargo maintenance system 580 is illustrated, in accordance with various embodiments. The cargo maintenance system 580 includes a wireless mobile maintenance display unit (WMMDU) 560, similar to the WMMDU 460 described above with reference to FIGS. 4A-4C. In various embodiments, the WMMDU 560 is configured to read and recognize identification data contained within a first data device 545, the identification data being unique to an operator of the WMMDU 560, such as, for example, the operator 461 described above with reference to FIG. 4B. Similarly, in various embodiments, the WMMDU 560 is configured to read and recognize identification and operational status data contained within a second data device 553, the identification and operational status data being associated with a particular LRU under inspection, such as, for example, the PDU 410 described above with reference to FIG. 4C or a one of the one or more local control panels 334 or the master control panel 331 described above with reference to FIGS. 3A and 3B.

Still referring to FIG. 5, in various embodiments, the cargo maintenance system 580 may further include a system controller 530 or an auxiliary control system 533, such as, for example, the system controller 330 or the auxiliary control system 333, described above with reference to FIGS. 3A and 3B. In various embodiments, one or more of the system controller 530 and the auxiliary control system 533 may be in operable communication with a training material file system 581 (*e.g.,* a server or storage location containing training materials). The training material file system 581 may include or provide access to various training or inspection materials, such as, for example, a fault isolation manual or video or a troubleshooting manual or video that are specific to a particular LRU undergoing inspection. In various embodiments, one or more of the system controller 530 and the auxiliary control system 533 may be in operable communication with a plane take-off checklist system 582 (*e.g.,* a server or storage location containing a plane take-off checklist). The plane take-off checklist system 582 may include or provide access to flight specific materials, such as, for example, a cargo load plan indicating the locations and weights for the various ULDs stored or to be stored throughout the cargo system.

Continuing with reference to FIG. 5, in various embodiments, one or more of the system controller 530 and the auxiliary control system 533 may also be in operable communication with a parts catalog 583 (*e.g.,* a first server or storage location containing a catalog or parts or a parts catalog). The parts catalog 583 may be stored locally (*e.g.,* on the system controller 530 or the auxiliary control system 533) or may be provided through access to a third-party website or a vendor or support provider of replacement parts via an Internet link. The parts catalog 583 may provide access to replacement parts that are specific to a particular LRU undergoing inspection. In various embodiments, one or more of the system controller 530 and the auxiliary control system 533 may also be in operable communication with a virtual training center 584 (*e.g.,* a second server or storage location containing operator training materials). The virtual training center 584 may provide access to virtual reality or augmented reality tools, as well as simulator-type training materials, enabling an operator to receive assistance with inspection or repair of a particular LRU undergoing inspection.

In various embodiments, the cargo maintenance system 580 provides several advantages over current maintenance systems, such as, for example, maintenance systems having wall-mounted cargo maintenance display units. One such advantage is the ability to perform local inspection of a particular LRU that may be positioned a distance of 30.48 meters or more (one-hundred or more feet) from the wall-mounted cargo maintenance display unit. Local inspection of the particular LRU may avoid the need for several operators to inspect the particular LRU - *e.g.,* one operator positioned at the wall-mounted unit to operate the particular LRU and another operator positioned at the LRU to observe the operation. The cargo maintenance system 580 enables a single operator, via the WMMDU 560, to both operate the particular LRU and to observe the operation. This feature additionally provides an added advantage of increased safety over the multiple-operator scenario when a first operator is unable to maintain visual contact with a second operator or the particular LRU undergoing inspection. The advantages include immediate identification of the particular LRU undergoing inspection and direct communication with a vendor or support provider or other supplier of parts (collectively referred to as a source of replacement parts) for the particular LRU, leading to increased efficiency and reduced maintenance time. Other advantages include immediate access to manuals, videos or training materials that are provided at the exact location of the particular LRU undergoing inspection, which also leads to increased efficiency and reduced maintenance time.

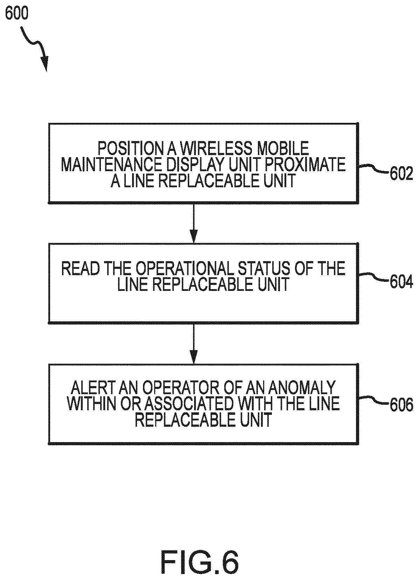

Referring now to FIG. 6, a method of monitoring an operational status of a line replaceable unit within a cargo handling system is described. In various embodiments the method 600 includes the following steps. A first step 602 includes positioning a wireless mobile maintenance display unit proximate the line replaceable unit. A second step 604 includes reading the operational status of the line replaceable unit from a data device in operable communication with the line replaceable unit via the wireless mobile maintenance display unit. A third step 606 includes providing an operator alert configured to alert an operator of an anomaly within or associated with the line replaceable unit via the wireless mobile maintenance display unit. In various embodiments, the method 600 further includes the step of reading an identification data unique to the operator. In various embodiments, the method 600 further includes the step of accessing a server or a storage location configured to provide at least one of a fault isolation manual, a cargo load plan, a parts catalog or a virtual training center. In various embodiments, the line replacement unit comprises at least one of a power drive unit, a local control panel or a master control panel.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

In various embodiments, system program instructions or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals *per se* from the claim scope and does not relinquish rights to all standard computer-readable media that are not only propagating transitory signals *per se.*

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A cargo handling system (300), comprising:
a first line replaceable unit;
a wireless mobile maintenance display unit (360) configured to monitor a first operational status of the first line replaceable unit;
and
a first data device associated with the first line replaceable unit and configured to provide a first operational status data concerning the first line replaceable unit to the wireless mobile maintenance display unit when the wireless mobile maintenance display unit is positioned in proximity of the first line replaceable unit, wherein the first operational status data refers to a failure or an anomaly occurring within the first line replaceable unit.

2. The cargo handling system of claim 1, wherein the first data device comprises a first radio frequency identification tag.

3. The cargo handling system of claim 2, wherein the first radio frequency identification tag is configured to provide identification data of the first line replaceable unit and the first operational status data of the first line replaceable unit.

4. The cargo handling system of claim 3, wherein the first line replaceable unit comprises at least one of a power drive unit, a local control panel or a master control panel.

5. The cargo handling system of claim 4,
wherein the wireless mobile maintenance display unit is configured to read identification data unique to an operator.

6. The cargo handling system of any preceding claim, further comprising a second line replaceable unit and a second data device configured to provide a second operational status data concerning the second line replaceable unit to the wireless mobile maintenance display unit.

7. The cargo handling system of claim 6, wherein the first line replaceable unit is a power drive unit and the second line replaceable unit is a local control panel or a master control panel.

8. The cargo handling system of claim 7 wherein the wireless mobile maintenance display unit is configured for operable communication with a controller configured to provide access to a fault isolation manual or a troubleshooting manual.

9. The cargo handling system of any preceding claim, wherein the wireless mobile maintenance display unit is configured for operable communication with at least one of a system controller or an auxiliary control system.

10. The cargo handling system of claim 9,
wherein the at least one of the system controller or the auxiliary control system comprises a server or a storage location configured to provide access to at least one of a fault isolation manual, a cargo load plan, a parts catalog or a virtual training center.

11. A method of monitoring an operational status of a line replaceable unit within a cargo handling system, comprising:
positioning a wireless mobile maintenance display unit proximate the line replaceable unit to identify a failure or anomaly occurring within the line replaceable unit;
reading an operational status data of the line replaceable unit from a data device associated with and in operable communication with the line replaceable unit; and
providing, via the wireless mobile maintenance display unit, an operator alert configured to alert an operator of the failure or anomaly occurring within or associated with the line replaceable unit, wherein the operational status data refers to the failure or the anomaly occurring within the line replaceable unit.

12. The method of claim 11, further comprising reading an identification data unique to the operator.

13. The method of claim 11 or 12, further comprising accessing a server or a storage location configured to provide at least one of a fault isolation manual, a cargo load plan, a parts catalog or a virtual training center.

14. The method of claim 13, wherein the line replaceable unit comprises at least one of a power drive unit, a local control panel or a master control panel.

## Patentansprüche

1. Frachthandhabungssystem (300), umfassend:
eine erste linienersetzbare Einheit;
eine drahtlose mobile Wartungsanzeigeeinheit (360), die dazu konfiguriert ist, einen ersten Betriebszustand der ersten linienersetzbaren Einheit zu überwachen;
und
eine erste Datenvorrichtung, die mit der ersten linienersetzbaren Einheit assoziiert und dazu konfiguriert ist, ein erstes Betriebszustandsdatum, das die erste linienersetzbare Einheit betrifft, an die drahtlose mobile Wartungsanzeigeeinheit bereitzustellen, wenn die drahtlose mobile Wartungsanzeigeeinheit in der Nähe der ersten linienersetzbare Einheit positioniert ist, wobei das erste Betriebszustandsdatum auf ein Versagen oder eine Anomalie, die innerhalb der ersten linienersetzbaren Einheit auftritt, verweist.

2. Frachthandhabungssystem nach Anspruch 1, wobei die erste Datenvorrichtung ein erstes Funkfrequenz-Identifikationsetikett umfasst.

3. Frachthandhabungssystem nach Anspruch 2, wobei das erste Funkfrequenz-Identifikationsetikett dazu konfiguriert ist, Identifikationsdaten der ersten linienersetzbaren Einheit und das erste Betriebszustandsdatum der ersten linienersetzbaren Einheit bereitzustellen.

4. Frachthandhabungssystem nach Anspruch 3, wobei die erste linienersetzbare Einheit mindestens eines von einer Kraftantriebseinheit, einem lokalen Bedienfeld oder einem Hauptbedienfeld umfasst.

5. Frachthandhabungssystem nach Anspruch 4,
wobei die drahtlose mobile Wartungsanzeigeeinheit dazu konfiguriert ist, Identifikationsdaten, die für einen Bediener eindeutig sind, zu lesen.

6. Frachthandhabungssystem nach einem der vorstehenden Ansprüche, das ferner eine zweite linienersetzbare Einheit und eine zweite Datenvorrichtung umfasst, die dazu konfiguriert ist, ein zweites Betriebszustandsdatum, das die zweite linienersetzbare Einheit betrifft, an die drahtlose mobile Wartungsanzeigeeinheit bereitzustellen.

7. Frachthandhabungssystem nach Anspruch 6, wobei die erste linienersetzbare Einheit eine Kraftantriebseinheit ist, und die zweite linienersetzbare Einheit ein lokales Bedienfeld oder ein Hauptbedienfeld ist.

8. Frachthandhabungssystem nach Anspruch 7, wobei die drahtlose mobile Wartungsanzeigeeinheit für betriebsbereite Kommunikation mit einer Steuerung konfiguriert ist, die dazu konfiguriert ist, Zugriff auf ein Fehlereingrenzungshandbuch oder ein Handbuch zur Fehlersuche bereitzustellen.

9. Frachthandhabungssystem nach einem der vorhergehenden Anspruch, wobei die drahtlose mobile Wartungsanzeigeeinheit für eine betriebsbereite Kommunikation mit mindestens einem von einer Systemsteuerung oder einem Hilfssteuersystem konfiguriert ist.

10. Frachthandhabungssystem nach Anspruch 9,
wobei die mindestens eine Systemsteuerung oder das Hilfssteuersystem einen Server oder einen Speicherort umfasst, der dazu konfiguriert ist, Zugriff auf mindestens eines von einem Fehlereingrenzungshandbuch, einem Frachtladeplan, einem Teilekatalog oder einem virtuellen Schulungszentrum bereitzustellen.

11. Verfahren zum Überwachen eines Betriebszustands einer linienersetzbaren Einheit innerhalb eines Frachthandhabungssystems, umfassend:
Positionieren einer drahtlosen mobilen Wartungsanzeigeeinheit in der Nähe der linienersetzbaren Einheit, um ein Versagen oder eine Anomalie innerhalb der linienersetzbaren Einheit zu identifizieren;
Lesen eines Betriebszustandsdatums der linienersetzbaren Einheit aus einer Datenvorrichtung, die mit der linienersetzbaren Einheit assoziiert ist und mit ihr in betriebsbereiter Kommunikation steht; und
Bereitstellen, über die drahtlose mobile Wartungsanzeigeeinheit, einer Bedienerwarnung, die dazu konfiguriert ist, einen Bediener über das Versagen oder die Anomalie zu warnen, das/die innerhalb der linienersetzbaren Einheit auftritt oder damit assoziiert ist, wobei das Betriebszustandsdatum auf das Versagen oder die Anomalie, die innerhalb der linienersetzbaren Einheit auftritt, verweist.

12. Verfahren nach Anspruch 11, das ferner das Lesen von eindeutigen Identifikationsdaten des Bedieners, umfasst.

13. Verfahren nach Anspruch 11 oder 12, das ferner das Zugreifen auf einen Server oder einen Speicherort umfasst, der dazu konfiguriert ist, mindestens eines von einem Fehlereingrenzungshandbuch, einem Frachtladeplan, einem Teilekatalog oder einem virtuellen Schulungszentrum bereitzustellen.

14. Verfahren nach Anspruch 13, wobei die linienersetzbare Einheit mindestens eines von einer Kraftantriebseinheit, einem lokalen Bedienfeld oder einem Hauptbedienfeld umfasst.

## Revendications

1. Système de maniement de chargement (300), comprenant :
un premier équipement remplaçable en escale ;
une unité d'affichage de maintenance mobile sans fil (360) configurée pour surveiller un premier état opérationnel du premier équipement remplaçable en escale ;
et
un premier dispositif de données associé au premier équipement remplaçable en escale et configuré pour fournir des premières données d'état opérationnel concernant le premier équipement remplaçable en escale à l'unité d'affichage de maintenance mobile sans fil lorsque l'unité d'affichage de maintenance mobile sans fil est positionnée à proximité du premier équipement remplaçable en escale, dans lequel les premières données d'état opérationnel font référence à une défaillance ou à une anomalie se produisant dans le premier équipement remplaçable en escale.

2. Système de maniement de chargement selon la revendication 1, dans lequel le premier dispositif de données comprend une première étiquette d'identification par radiofréquence.

3. Système de maniement de chargement selon la revendication 2, dans lequel la première étiquette d'identification par radiofréquence est configurée pour fournir des données d'identification du premier équipement remplaçable en escale et les premières données d'état opérationnel du premier équipement remplaçable en escale.

4. Système de maniement de chargement selon la revendication 3, dans lequel le premier équipement remplaçable en escale comprend au moins l'un d'une unité d'entraînement électrique, d'un panneau de commande local ou d'un panneau de commande principal.

5. Système de maniement de chargement selon la revendication 4, dans lequel l'unité d'affichage de maintenance mobile sans fil est configurée pour lire des données d'identification propres à un opérateur.

6. Système de maniement de chargement selon une quelconque revendication précédente, comprenant en outre un second équipement remplaçable en escale et un second dispositif de données configuré pour fournir une seconde donnée d'état opérationnel concernant le second équipement remplaçable en escale à l'unité d'affichage de maintenance mobile sans fil.

7. Système de maniement de chargement selon la revendication 6, dans lequel le premier équipement remplaçable en escale est une unité d'entraînement électrique et le second équipement remplaçable en escale est un panneau de commande local ou un panneau de commande principal.

8. Système de maniement de chargement selon la revendication 7, dans lequel l'unité d'affichage de maintenance mobile sans fil est configurée pour une communication opérationnelle avec un dispositif de commande configuré pour fournir un accès à un manuel d'isolation de panne ou à un manuel de dépannage.

9. Système de maniement de chargement selon une quelconque revendication précédente, dans lequel l'unité d'affichage de maintenance mobile sans fil est configurée pour une communication opérationnelle avec au moins l'un d'un dispositif de commande de système ou d'un système de commande auxiliaire.

10. Système de maniement de chargement selon la revendication 9,
dans lequel l'au moins un parmi le dispositif de commande de système ou le système de commande auxiliaire comprend un serveur ou un emplacement de stockage configuré pour fournir un accès à au moins l'un d'un manuel d'isolation de panne, d'un plan de chargement de cargaison, d'un catalogue de pièces ou d'un centre de formation virtuel.

11. Procédé de surveillance d'un état opérationnel d'un équipement remplaçable en escale dans un système de maniement de chargement, comprenant :
le positionnement d'une unité d'affichage de maintenance mobile sans fil à proximité de l'équipement remplaçable en escale pour identifier une défaillance ou une anomalie se produisant dans l'équipement remplaçable en escale ;
la lecture d'une donnée d'état opérationnel de l'équipement remplaçable en escale à partir d'un dispositif de données associé à et en communication opérationnelle avec l'équipement remplaçable en escale ; et
la fourniture, via l'unité d'affichage de maintenance mobile sans fil, d'une alerte d'opérateur configurée pour alerter un opérateur de la défaillance ou de l'anomalie se produisant dans ou associée à l'équipement remplaçable en escale, dans lequel les données d'état opérationnel se rapportent à la défaillance ou à l'anomalie se produisant dans l'équipement remplaçable en escale.

12. Procédé selon la revendication 11, comprenant en outre la lecture d'une donnée d'identification propre à l'opérateur.

13. Procédé selon la revendication 11 ou 12, comprenant en outre l'accès à un serveur ou à un emplacement de stockage configuré pour fournir au moins l'un d'un manuel d'isolation de panne, d'un plan de chargement de cargaison, d'un catalogue de pièces ou d'un centre de formation virtuel.

14. Procédé selon la revendication 13, dans lequel l'équipement remplaçable en escale comprend au moins l'un d'une unité d'entraînement électrique, d'un panneau de commande local ou d'un panneau de commande principal.
